# EUROPÄISCHE PATENTSCHRIFT

(11) **EP 2 726 323 B1**
(45) Veröffentlichungstag und Bekanntmachung des Hinweises auf die Patenterteilung: **10.05.2017**
(21) Anmeldenummer: 12753053.3
(22) Anmeldetag: 21.06.2012
(51) Int. Cl.: F16F 15/08, H02K 7/08, H02K 7/116

(54) **STELLEINHEIT FÜR KRAFTFAHRZEUGTECHNISCHE ANWENDUNGEN**
ACTUATOR UNIT FOR MOTOR VEHICLE APPLICATIONS
UNITÉ DE RÉGLAGE POUR DES APPLICATIONS EN AUTOMOBILE

(30) Priorität: 30.06.2011 DE 102011107634
(43) Veröffentlichungstag der Anmeldung: 07.05.2014
(73) Patentinhaber: Kiekert Aktiengesellschaft, 42579 Heiligenhaus (DE)
(72) Erfinder: BLUMENTHAL, Frank, 47906 Kempen (DE); SCHLABS, Winfried, 44869 Bochum (DE); TÖPFER, Claus, 71063 Sindelfingen (DE)
(86) Internationale Anmeldenummer: PCT/DE2012/000644
(87) Internationale Veröffentlichungsnummer: WO 2013/000454

(56) Entgegenhaltungen:
- EP-A2- 1 453 181
- DE-A1- 10 019 572
- DE-A1- 10 131 590
- DE-A1-102009 036 835
- US-A- 1 688 891
- US-B1- 6 262 504

## Beschreibung

Die Erfindung betrifft eine Stelleinheit für kraftfahrzeugtechnische Anwendungen, insbesondere Kraftfahrzeugtürverschlüsse, mit einem Gehäuse, ferner mit einem im Gehäuse angeordneten Antrieb, einem von dem Antrieb beaufschlagbaren Stellglied, und mit zumindest einem Gummilager für den Antrieb.

Eine Stelleinheit des eingangs beschriebenen Aufbaus wird in der DE 10 2009 036 835 A1 der Anmelderin beschrieben. Tatsächlich ist an dieser Stelle das Stellglied als Linear-Stellglied ausgelegt und wird dafür genutzt, eine Zuzieheinrichtung zu beaufschlagen. Bei der Zuzieheinrichtung mag es sich um eine solche handeln, wie sie in der DE 101 12 120 B4 beschrieben wird.

Das Gummilager dient im Rahmen der DE 10 2009 036 835 A1 primär dazu, einen Boden des als Elektromotor ausgebildeten Antriebes aufzunehmen und zu umschließen. Neben diesem Gummilager verfügt der Antrieb zusätzlich noch über einen Presslagersitz. Auf diese Weise wird die vom Antrieb an seiner Abtriebswelle zur Verfügung gestellte Rotationsbewegung einwandfrei, präzise und vibrationsarm auf das Stellglied übertragen. Bei dem Stellglied kann es sich entsprechend der DE 10 2009 036 835 A1 um einen Spindelmutterantrieb handeln, was ohnehin nur beispielhaft und nicht einschränkend gilt.

Durch die DE 101 31 590 A1 ist eine Vorrichtung zur Befestigung eines Elektromotors bekannt geworden, bei dem es sich um einen Gebläsemotor handelt. Dabei ist das Aufnahmegehäuse mit mindestens einem federelastischen Halteelement zur axialen Fixierung ausgerüstet.

Die US 6 262 504 B1 beschäftigt sich mit einem Motor sowie einem zugehörigen Abdeckgehäuse, wobei an dieser Stelle erneut ein Gummilager zum Einsatz kommt.

Der gattungsbildende Stand der Technik nach der DE 10 2009 036 835 A1 wie auch die beiden letztgenannten gattungsfremden Dokumente stoßen dann an Grenzen, wenn das den Antrieb aufnehmende Gehäuse ungenau gefertigt ist. Hieraus können Unzuträglichkeiten bei der Übertragung der Drehbewegung des Antriebes auf ein Getriebe respektive das von dem Antrieb beaufschlagbare Stellglied resultieren. Tatsächlich führen Ungenauigkeiten an dieser Stelle dazu, dass das Getriebe respektive der Antrieb mit erhöhten Geräuschen und/oder einem zunehmenden Verschleiß arbeiten. Hier setzt die Erfindung ein.

Der Erfindung liegt das technische Problem zugrunde, eine derartige Stelleinheit für kraftfahrzeugtechnische Anwendungen so weiter zu entwickeln, dass das Geräuschverhalten sowie eine Ausrichtung des Motors zum Getriebe optimiert ist und Funktionsstörungen nicht oder praktisch nicht auftreten.

Zur Lösung dieser technischen Problemstellung ist eine gattungsgemäße Stelleinheit im Rahmen der Erfindung dadurch gekennzeichnet, dass das Gehäuse mit am Umfang des Gummilagers verteilt angeordneten Aufnahmevorsprüngen im Bereich einer Gummilageraufnahme ausgerüstet ist. - Die Gummilageraufnahme dient als gleichsam Haltevorrichtung für das Gummilager. Das Gummilager sorgt seinerseits für die Lagerung des Antriebes.

Im Allgemeinen sind drei oder mehr Aufnahmevorsprünge in der Gummilageraufnahme im Gehäuse vorgesehen, wenngleich grundsätzlich auch mit zwei Aufnahmevorsprüngen gearbeitet werden kann. Meistens sind die Aufnahmevorsprünge wenigstens teilweise gleichmäßig am Umfang des Gummilagers verteilt im Gehäuse im Bereich der Gummilageraufnahme angeordnet. Außerdem hat es sich bewährt, wenn die Aufnahmevorsprünge vorzugsweise manuell nacharbeitbar ausgebildet sind.

Diese manuelle Nacharbeitbarkeit der Aufnahmevorsprünge setzt voraus, dass zumindest die Aufnahmevorsprünge aus einem leicht (manuell) zu bearbeitenden Werkstoff hergestellt werden. Hier hat sich Kunststoff als besonders günstig erwiesen, welches beispielsweise mit einem Messer, einer Pfeile oder anderen Schleifwerkzeugen problemlos und schnell per Hand nachbearbeitet werden kann.

Als weiterer Vorteil hat sich herausgestellt, wenn die Aufnahmevorsprünge derart am Gehäuse ausgebildet sind, dass keine Hinterschnitte gebildet sind. Tatsächlich arbeitet man regelmäßig so, dass die Aufnahmevorsprünge zusammen mit dem Gehäuse spritzgeformt werden. D. h., das Gehäuse und die in der Gummilageraufnahme vorgesehenen Aufnahmevorsprünge werden in einem Zug und in einem gemeinsamen Werkzeug durch Spritzgießen hergestellt. In diesem Zusammenhang hat sich Kunststoffspritzgießen als besonders vorteilhaft herausgestellt. Tatsächlich mögen die Aufnahmevorsprünge als jeweils Radialvorsprünge ausgelegt sein. Es handelt sich also um Vorsprünge, die in Radialrichtung des Gehäuses und im Vergleich zu seinem Mittelpunkt bzw. dem Mittelpunkt der meistens kreisringartigen Gummilageraufnahme in der Gummilageraufnahme erhaben ausgebildet sind. Eine solche Auslegung der Aufnahmevorsprünge als Radialvorsprünge lässt sich bei einem Gehäuse als insgesamt Spritzgussformteil aus Kunststoff besonders einfach und kostengünstig in einem (einzigen) zugehörigen Spritzgusswerkstück problemlos realisieren.

Durch die mit dem Gummilager wechselwirkenden Aufnahmevorsprünge in der Gummilageraufnahme wird im Rahmen der Erfindung zunächst einmal erreicht, dass der Antrieb unter Zwischenschaltung des Gummilagers eine Abstützung in der Gummilageraufnahme im Bereich von Aufnahmepunkten erfährt. Diese Aufnahmepunkte werden von den Aufnahmevorsprüngen definiert. Dadurch, dass die Aufnahmevorsprünge und folglich die Aufnahmepunkte über den Umfang des Gummilagers gesehen verteilt angeordnet sind, erfährt das Gummilager eine einwandfreie Lagesicherung, und zwar typischerweise sowohl in axialer als auch in radialer Richtung. Eine axiale Lagesicherung kann ebenfalls durch das Gummilager erfolgen. Im Wesentlichen dient das Gummilager aber zur radialen Lagesicherung, so dass ein Toleranzausgleich in Bezug auf das Getriebe erfolgen kann.

Außerdem kann die punktuelle Aufnahme des Gummilagers im Innern der Gummilageraufnahme des Gehäuses dazu genutzt werden, um problemlos Lagetoleranzen zwischen dem Antrieb und beispielsweise einem nachgeschalteten Getriebe respektive dem folgenden Stellglied auszugleichen. Beispielsweise lassen sich einer oder mehrere Aufnahmevorsprünge - wie beschrieben - problemlos nacharbeiten, um etwaige Ungenauigkeiten bei der Ausrichtung des Antriebes gegenüber dem Stellglied bzw. einem nachgeordneten Getriebe eliminieren zu können. In jedem Fall sorgen die Aufnahmevorsprünge regelmäßig sowohl für eine radiale Sicherung des Gummilagers und folglich des Antriebes als auch für einen radialen Toleranzausgleich. Außerdem besteht die Möglichkeit mit Hilfe der Aufnahmevorsprünge zusätzlich eine axiale Ausrichtung und Sicherung des Gummilagers und damit des Antriebes vorgenommen und erreicht werden. Ebenso ein axialer Toleranzausgleich.

Zu diesem Zweck mag das Gummilager als topfförmiger Gummilagerring ausgebildet sein. Außerdem verfügt der Gummilagerring vorteilhaft an seinem Umfang und in Axialrichtung im Querschnitt über einen wellenförmigen Charakter. Aufgrund dieses wellenförmigen Charakters werden mehrere Rillen oder Nuten in Axialrichtung des Gummilagerringes beobachtet, die hintereinander angeordnet sind. Diese einzelnen Rillen respektive Nuten in Axialrichtung des Gummilagerringes wechselwirken als Aufnahmeeinformungen mit den Aufnahmevorsprüngen am Gehäuse. Infolge des Rillencharakters kann der Antrieb über den zwischengeschalteten Gummilagerring axial einwandfrei gegenüber dem Gehäuse ausgerichtet werden. Hierzu trägt ergänzend der Umstand bei, dass der Antrieb und der Gummilagerring im Allgemeinen rotationssymmetrisch ausgebildet sind. Meistens verfügen der Antrieb und der Gummilagerring über eine gemeinsame Rotationssymmetrieachse, die regelmäßig mit der Abtriebswelle des als Elektromotor ausgeführten Antriebes zusammenfällt.

Das Gummilager bzw. der Gummilagerring weist antriebsseitig bzw. motorseitig, d. h. auf seiner dem Motor respektive Antrieb zugewandeten Oberfläche, zumindest eine in eine Ausnehmung des Motors eingreifende Ausformung auf. Indem die Ausformung am Gummilager bzw. Gummilagerring in die Ausnehmung des Motors eingreift, wird insgesamt eine verdrehsichere Lagerung des Antriebs gegenüber dem Gummilager bzw. des Elektromotors im topfförmigen Gummilagerring erreicht.

Im Übrigen sind zu den Aufnahmevorsprüngen korrespondierende Aufnahmeeinformungen vorsprungseitig am Gummilager vorgesehen. Bei diesen Aufnahmeeinformungen kann es sich um die bereits angesprochenen und in Axialrichtung hintereinander angeordneten Rillen handeln, die jeweils den gesamten Umfang des topfförmigen Gummilagerringes erfassen. Indem die Aufnahmevorsprünge in die zugehörigen Aufnahmeeinformungen vorsprungsseitig am Gummilager eingreifen, wird eine zusammengesetzte Verdrehsicherung ausgebildet. Mit Hilfe dieser Verdrehsicherung wird das Gummilager bzw. der topfförmige Gummilagerring gegenüber dem Gehäuse fixiert. Die Fixierung kann dabei sowohl in radialer als auch axialer Richtung erfolgen.

Wie bereits erläutert, sind die Aufnahmeeinformungen vorsprungsseitig bzw. außenseitig am Gummilager in der Art von Rillen in Axialrichtung gestaltet. Dadurch wird das Gummilager und mit ihm der Antrieb in axialer Richtung fixiert. Zusätzlich mögen die Aufnahmeeinformungen bzw. Rillen über eine begrenzte Ausdehnung in Umfangsrichtung verfügen. Dadurch findet zugleich auch eine radiale Fixierung des Gummilagers bzw. des topfförmigen Gummilagerringes und mit ihm des Antriebes im Vergleich zum Gehäuse bzw. dessen Gummilageraufnahme statt.

Das Gummilager kann darüber hinaus mit zumindest einem Axialfortsatz ausgerüstet werden. Dieser Axialfortsatz greift im Allgemeinen in eine Axialausnehmung im Gehäuse ein, um eine axiale Lagesicherung des Gummilagers und folglich des Motors zu erreichen. Der Axialfortsatz kann mit ein oder mehreren Öffnungen ausgerüstet werden, durch die beispielsweise Verbindungskabel zum Antrieb hindurchgeführt werden. Meistens ist der Axialfortsatz in Verlängerung einer Motorwelle bzw. Abtriebswelle des Antriebes vorgesehen und an das Gummilager angeschlossen. D. h., der Axialfortsatz kann sowohl mittig als auch außermittig im Vergleich zum Gummilager bzw. dem topfförmigen Gummiring angeordnet werden.

Der Antrieb bzw. der überwiegend zylindrisch ausgelegte Elektromotor ist im Allgemeinen mit seinem Boden bzw. bodenseitig in den topfförmigen Gummilagerring eingesetzt. Dem Boden gegenüberliegend ragt die Abtriebswelle des Elektromotors kopfseitig gegenüber dessen zugehörigen zylindrischen Gehäuse vor. Die Abtriebswelle wechselwirkt mit dem Stellglied bzw. einem vorgeschalteten Getriebe. Infolge der radialen und axialen Fixierung bzw. Lagesicherung des Elektromotors mit Hilfe des erfindungsgemäß ausgelegten Gummilagers in Kombination mit den als Aufnahmepunkte fungierenden Aufnahmevorsprüngen im Bereich der Gummilageraufnahme kann prinzipiell mit einer einzigen Lagerung des Antriebes gearbeitet werden. Zusätzlich sind Lagerungsmaßnahmen beispielsweise am Kopf des Elektromotors im Bereich der Abtriebswelle möglich.

Trotz der mehreren in Axialrichtung hintereinander angeordneten Rillen außenseitig bzw. vorsprungseitig des topfförmigen Gummilagerringes und dem im Querschnitt wellenförmigen Charakter wird insgesamt eine zylindrische Grundform des Gummilagerringes beobachtet. Tatsächlich mögen die Rillen oder Nuten ebenso wie dazwischen befindliche Erhebungen jeweils einzeln oder gemeinsam im Querschnitt trapezartig ausgelegt sein. Das ist selbstverständlich nur beispielhaft und nicht zwingend zu verstehen.

Im Ergebnis wird eine Stelleinheit für kraftfahrzeugtechnische Anwendungen und insbesondere Kraftfahrzeugtürverschlüsse zur Verfügung gestellt, die sich insbesondere für eine Kombination mit einer Zuzieheinrichtung eignet, wie sie in der gattungsbildenden DE 10 2009 036 835 A1 bzw. der dort in Bezug genommenen DE 101 12 120 B4 im Detail beschrieben wird. Dabei sorgt die Lagerung des Antriebes mit Hilfe des erfindungsgemäß speziell ausgelegten topfförmigen Gummilagerringes für den Antrieb respektive den Elektromotor in diesem Zusammenhang dafür, dass zunächst einmal Motorschwingungen des Antriebes problemlos aufgenommen und durch das Gummilager gedämpft werden. Außerdem sorgt das Gummilager dafür, dass Motorgeräusche eliminiert werden. In diesem Zusammenhang hat es sich als besonders günstig erwiesen, das etwaige Lagetoleranzen zwischen dem Antrieb und einem nachgeschalteten Getriebe respektive dem folgenden Stellglied problemlos ausgeglichen werden können. Hierzu trägt insbesondere der Umstand bei, dass die Aufnahmevorsprünge für die punktuelle Lagerung des Gummilagerringes im Innern der Gummilageraufnahme gegebenenfalls nachgearbeitet werden können. Auf diese Weise lässt sich ein Toleranzausgleich sogar noch im Zuge der Fertigung bewerkstelligen. Hierin sind die wesentlichen Vorteile zu sehen.

Im Folgenden wird die Erfindung anhand einer lediglich ein Ausführungsbeispiel darstellenden Zeichnung näher erläuter; es zeigen:
- **Fig. 1**: die erfindungsgemäße Stelleinheit in einer schematischen Explositions-darstellung,
- **Fig. 2**: einen Schnitt durch den Gegenstand nach Fig. 1 im Bereich des Gummilagers,
- **Fig. 3**: den Antrieb inklusive Gummilager in einer Seitenansicht und
- **Fig. 4**: eine Ansicht auf den Gegenstand nach Fig. 3 aus Richtung X.

In den Figuren ist eine Stelleinheit für kraftfahrzeugtechnische Anwendungen dargestellt. Bei kraftfahrzeugtechnischen Anwendungen handelt es sich im Beispielfall und nicht einschränkend um Stellfunktionen in Verbindung mit einem oder mehreren Kraftfahrzeugtürverschlüssen 1. Tatsächlich mag die dargestellte Stelleinheit dafür genutzt werden, eine Zuzieheinrichtung bei einem solchen Kraftfahrzeugtürverschluss 1 zu beaufschlagen, wie sie beispielsweise in der DE 101 12 120 B4 beschrieben wird. Das ist selbstverständlich nur beispielhaft und nicht einschränkend zu verstehen.

Um die beschriebene Stellbewegung bzw. Beaufschlagung der Zuzieheinrichtung bei dem Kraftfahrzeugtürverschluss 1 im Detail bewerkstelligen zu können, verfügt die Stelleinheit in ihrem grundsätzlichen Aufbau über einen Antrieb 2 und ein Stellglied 3, 4, welches vorliegend als Linear-Stellglied 3, 4 ausgebildet ist. Das Stellglied bzw. Linear-Stellglied 3, 4 wird von dem Antrieb 2 beaufschlagt, um die Zuzieheinrichtung an dem Kraftfahrzeugtürverschluss 1 zu betätigen.

Darüber hinaus ist noch ein Gehäuse 8a, 8b realisiert. Der Antrieb 2 wird in dem Gehäuse 8a, 8b aufgenommen bzw. ist hierin angeordnet. Das Linear-Stellglied 3, 4 setzt sich im Einzelnen aus einem Spindeltrieb mit einer Gewindespindel 3 und einer in dem Gehäuse 8a, 8b mittels Kugeln oder Gleitlagern gelagerten Spindelmutter 4 zusammen. Der Antrieb bzw. Elektromotor 2 verfügt über eine Abtriebswelle 5.

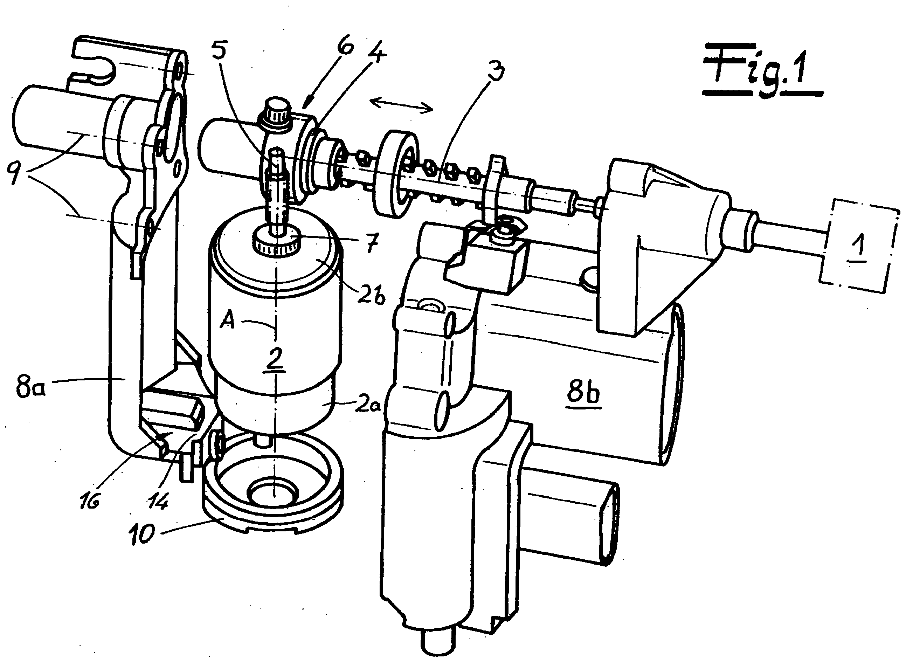

Die Abtriebswelle 5 überträgt Ihre Rotationsbewegungen über ein Schneckengetriebe 6 auf das Linear-Stellglied 3, 4 bzw. die Spindelmutter 4. Dadurch wird die ortsfest gelagerte Spindelmutter 4 in Rotationen versetzt und bewegt die auf der Spindelmutter 4 gelagerte Spindel bzw. Gewindespindel 3 je nach ihrer Drehrichtung hin und her, wie dies ein Doppelpfeil in der Fig. 1 andeutet. Ein an die Spindel 3 angeschlossener Bowdenzug oder ein vergleichbares Verbindungselement überträgt nun diese linearen Stellbewegungen des Linear-Stellgliedes 3, 4 auf den Kraftfahrzeugtürverschluss 1 bzw. die dort vorgesehene Zuzieheinrichtung im Beispielfall.

Der Antrieb bzw. Elektromotor 2 mag über eine Lagerstelle 7 mit dem Gehäuse 8a, 8b gekoppelt sein. Tatsächlich ist das Gehäuse 8a, 8b zweigeteilt ausgeführt. Es setzt sich im Kern aus einem Deckelteil 8a und einem Oberteil 8b zusammen. Zur Vereinigung der beiden Gehäuseteile 8a, 8b mögen Verbindungselemente 9 dienen.

Neben der Lagerstelle 7, die grundsätzlich entbehrlich ist, ist erfindungsgemäß zusätzlich noch ein Gummilager 10 für den Antrieb 2 vorgesehen. Bei dem Gummilager 10 handelt es sich im Ausführungsbeispiel um einen topfförmigen Gummilagerring 10. Der Antrieb 2 ist mit seinem Boden 2a in den topfförmgien Gummilagerring 10 eingesetzt. Dagegen erfasst der Gummilagerring 10 einen mittleren Bereich des Antriebes 2 ebenso wenig wie seinen Kopf 2b. Am Kopf 2b des Antriebes 2 ragt die Abtriebswelle 5 hervor und arbeitet wie beschrieben auf das Schneckengetriebe 6.

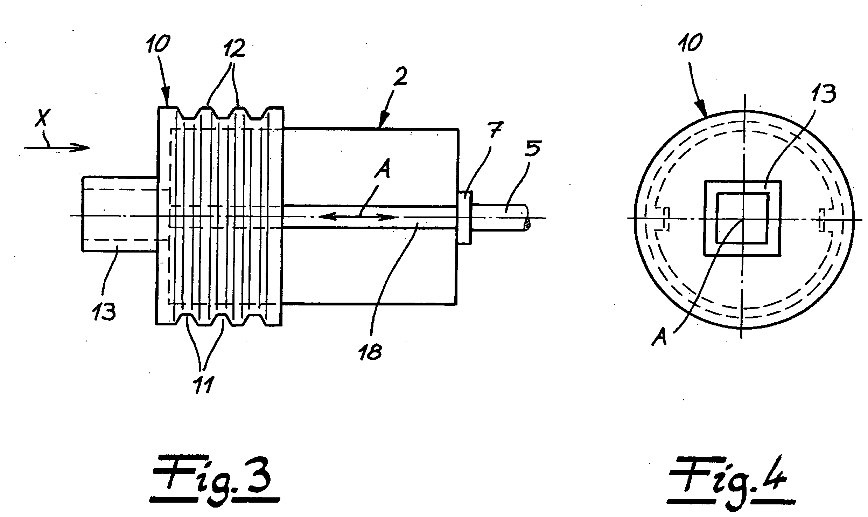

Bei dem Antrieb 2 handelt es sich im Ausführungsbeispiel um einen Elektromotor 2, insbesondere einen Gleichstrommotor. Anhang der Fig. 3 erkennt man, dass der überwiegend zylindrische Gummilagerring 10 an seinem Umfang und in Axialrichtung A gesehen im Querschnitt wellenförmig ausgebildet ist. Tatsächlich verfügen im Rahmen des Ausführungsbeispiels sowohl der Gummilagerring 10 als auch der Antrieb 2 über eine insgesamt rotationssymmetrische Auslegung im Vergleich zu einer gemeinsamen Rotationssymmetrieachse A, welche zugleich die Axialrichtung A vorgibt. Auf der Rotationssymmetrieachse A ist die Abtriebswelle 5 angeordnet.

Aufgrund des im Querschnitt wellenförmigen Charakters des Gummilagerringes 10 an seinem Umfang in Axialrichtung A stellen sich Rillen bzw. Nuten 11 und Erhebungen 12 im Wechsel ein. Tatsächlich sind mehrere Rillen bzw. Nuten 11 in Axialrichtung A hintereinander angeordnet. Gleiches gilt für die Erhebungen 12. Die Rillen bzw. Nuten 11 und/oder die Erhebungen 12 können jeweils im Querschnitt trapezförmig gestaltet werden. Dadurch verfügt der Gummilagerring 10 insgesamt über die zylindrische Gestalt.

Schlussendlich erkennt man noch einen Axialfortsatz 13 an dem Gummilagerring 10. Dieser Axialfortsatz 13 ist mittig im Vergleich zu dem zylindrischen und topfförmigen Gummilagerring 10 auf der Rotationssymmetrieachse A angeordnet. In montiertem Zustand des Gummilagerringes 10 greift der Axialfortsatz 13 in eine Axialausnehmung 14 im Gehäuse ein. Dadurch erfährt der Gummilagerring 10 und mit ihm der im Gummilagerring 10 aufgenommene Antrieb 2 eine axiale Fixierung. Der Axialfortsatz 13 ist in Verlängerung der Abtriebswelle 5 des Antriebes 2 angeordnet.

Von besonderer Bedeutung für die Erfindung ist nun der Umstand, dass das Gehäuse 8a, 8b mit am Umfang des Gummilagers bzw. Gummilagerrings 10 verteilt angeordneten Aufnahmevorsprüngen 15 ausgerüstet ist, die im Bereich einer Gummilageraufnahme 16 vorgesehen sind. Die Gummilageraufnahme 16 findet sich im Innern des Gehäuses 8a, 8b, und zwar im Bereich des Gehäuses 8a, 8b, in welchem das Gummilager bzw. der Gummilagerring 10 in montiertem Zustand platziert ist. Die Gummilageraufnahme 16 ist für sich genommen kreisringartig gestaltet. Dabei fällt im gezeigten Beispiel der Mittelpunkt des Kreisringes mit der Rotationssymmetrieachse A zusammen, was selbstverständlich nicht zwingend ist.

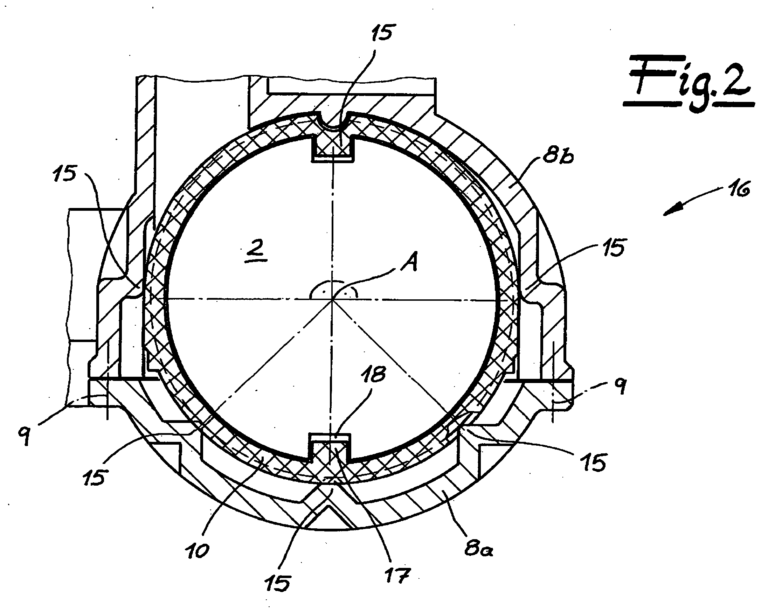

Anhand der Schnittdarstellung entsprechend der Fig. 2 durch das Gehäuse 8a, 8b im Bereich der Gummilageraufnahme 16 erkennt man, dass wenigstens zwei Aufnahmevorsprünge 15, üblicherweise drei oder mehr Aufnahmevorsprünge 15 und nach dem Ausführungsbeispiel insgesamt sechs Aufnahmevorsprünge 15 im Bereich der Gummilageraufnahme 16 des Gehäuses 8a, 8b vorgesehen sind. Die einzelnen Aufnahmevorsprünge 15 sind zumindest teilweise gleichmäßig am Umfang des Gummilagers 10 verteilt angeordnet.

Tatsächlich finden sich drei Aufnahmevorsprünge 15 in einem Bogenabstand von ca. 90°, wohingegen die weiteren drei Aufnahmevorsprünge 15 jeweils einen Bogenwinkel von ca. 45° überstreichen. Das ist selbstverständlich nur beispielhaft zu verstehen.

Die einzelnen Aufnahmevorsprünge 15 fungieren als Auflagepunkte bzw. Aufnahmepunkte für das Gummilager bzw. den Gummilagerring 10. Tatsächlich wird das Gummilager 10 bzw. der Gummilagerring 10 punktuell von den Aufnahmevorsprüngen 15 abgestützt und an den Aufnahmevorsprüngen 15 in der Gummilageraufnahme 16 im Innern des Gehäuses 8a, 8b gelagert. Auf diese Weise erfährt der zugleich in dem Gummilagerring 10 aufgenommene Antrieb respektive Elektromotor 2 einen etwaigen Toleranzausgleich. Tatsächlich werden nicht nur mit Hilfe des Gummilagers 10 Motorschwingungen aufgenommen und Motorgeräusche eliminiert, sondern mit Hilfe der Aufnahmevorsprünge 15 können auch etwaige Lagetoleranzen zwischen dem Antrieb 2 und dem Stellglied 3, 4 respektive dem vorgeschalteten Getriebe bzw. Schneckengetriebe 6 ausgeglichen werden. Zu diesem Zweck lassen sich einzelne oder alle Aufnahmevorsprünge 15 manuell nachbearbeiten. Das gelingt besonders einfach, zielgenau und schnell aufgrund der Tatsache, dass das Gehäuse 8a, 8b insgesamt als Spritzgussgehäuse und vorzugsweise Kunststoffspritzgussgehäuse ausgebildet ist.

Tatsächlich lassen sich die Aufnahmevorsprünge 15 zusammen mit dem Gehäuse 8a, 8b in einem Zug formen. Die Aufnahmevorsprünge 15 sind also zusammen mit dem Gehäuse 8a, 8b spritzgeformt.

Zu den Aufnahmevorsprüngen 15 am Gehäuse 8a, 8b bzw. im Bereich der Gummilageraufnahme 16 korrespondieren Aufnahmeeinformungen 11 vorsprungsseitig am Gummilager 10. Bei den Aufnahmeeinformungen 11 vorsprungsseitig, d. h. auf der den Aufnahmevorsprüngen 15 zugewandten Oberfläche des Gummilagers 10, handelt es sich im Ausführungsbeispiel um die bereits beschriebenen Rillen bzw. Nuten 11. Diese Rillen bzw. Nuten 11 können umlaufend des Gummilagers 10 realisiert sein oder nur einen begrenzten radialen Bogenwinkel im Vergleich zur Axialrichtung A überstreichen. In letztgenanntem Fall wird beim Eingriff der Aufnahmevorsprünge 15 in die zugehörige Rille oder Nut 11 eine radiale Fixierung des Gummilagers 10 gegenüber dem Gehäuse 8a, 8b erreicht.

Die Rillen bzw. Nuten 11 sorgen darüber hinaus - egal ob sie nun über den gesamten Umfang verlaufen oder nur über einen eingegrenzten Bogenwinkel realisiert sind - insgesamt und ergänzend für eine axiale Fixierung des Gummilagers 10. Denn die Aufnahmevorsprünge 15 können in der Axialrichtung A nur jeweils in die Rillen bzw. Nuten 11 zwischen den Erhebungen 12 eingreifen, woraus die bereits beschriebene axiale Fixierung des Gummilagers 10 resultiert. Die zu den Aufnahmevorsprüngen 15 korrespondierenden Aufnahmeeinformungen 11 vorsprungsseitig am Gummilager 10 dienen also der zusammengesetzen Ausbildung einer Verdrehsicherung des Gummilagers 10 gegenüber dem Gehäuse 8a, 8b. Das gilt zumindest für den Fall, dass die Rillen bzw. Nuten 11 nur einen jeweils begrenzten Bogenwinkel überstreichen. Auf jeden Fall wird eine axiale Fixierung des Gummilagers 10 mit Hilfe der Rillen bzw. Nuten respektive der Aufnahmeeinformungen 11 erzielt und gegebenenfalls noch eine radiale Festlegung.

Um neben dem Gummilager 10 auch den Antrieb bzw. Elektromotor 2 fixieren zu können, ist das Gummilager 10 motorseitig bzw. antriebsseitig, d. h. auf seiner dem Antrieb 2 zugewandten Oberfläche, zusätzlich noch mit zumindest einer Ausformung 17 ausgerüstet. Die Ausformung 17 greift in eine Ausnehmung 18 des Antriebes bzw. Motors 2 ein. Auf diese Weise wird der Antrieb respektive Elektromotor 2 verdrehsicher in und gegenüber dem Gummilager 10 gelagert.

Schließlich greift bei in das Gehäuse 8a, 8b eingesetztem Gummilager 10 der bereits angesprochene Axialfortsatz 13 in die zugehörige Axialausnehmung 14 im Gehäuse 8a, 8b ein. Auf diese Weise erfährt der von dem Gummilager 10 umschlossene bzw. hierin aufgenommene Antrieb respektive Elektromotor 2 eine radial verdrehsichere Lagerung und ist zugleich axial ausgerichtet. Denn der Axialfortsatz ist im Querschnitt als Mehrkant ausgebildet und greift in die korrespondierend ausgelegte Axialausnehmung 14 ein. Das ist von besonderer Bedeutung, damit die Abtriebswelle 5 des Elektromotors 2 einwandfrei mit dem Schneckengetriebe 6 kämmen kann. Zugleich wird das Gummilager 10 axial und radial in dem Gehäuse 8a, 8b fixiert.

Dabei mag der Axialfortsatz 13 an dem Gummilager 10 mit einer nicht ausdrücklich dargestellten Öffnung ausgerüstet werden, durch welche ein oder mehrere Versorgungskabel für den Antrieb respektive Elektromotor 2 geführt werden. Der Axialfortsatz 13 als solcher ist als zum Innern bzw. in Richtung auf den Antrieb 2 hin offenes Hohlquader im Ausführungsbeispiel ausgelegt. Grundsätzlich ist an dieser Stelle natürlich auch eine zylindrische Form denkbar und wird von der Erfindung umfasst.

## Patentansprüche

1. Stelleinheit für kraftfahrzeugtechnische Anwendungen, insbesondere Kraftfahrzeugtürverschlüsse (1), mit einem Gehäuse (8a, 8b), ferner mit einem im Gehäuse (8a, 8b) angeordneten Antrieb (2), einem von dem Antrieb (2) beaufschlagbaren Stellglied (3, 4), und mit zumindest einem Gummilager (10) für den Antrieb (2), **dadurch gekennzeichnet, dass** das Gehäuse (8a, 8b) mit am Umfang des Gummilagers (10) verteilt angeordneten Aufnahmevorsprüngen (15) im Bereich einer Gummilageraufnahme (16) ausgerüstet ist.

2. Stelleinheit nach Anspruch 1, **dadurch gekennzeichnet, dass** drei oder mehr Aufnahmevorsprünge (15) in der Gummilageraufnahme (16) im Gehäuse (8a, 8b) vorgesehen sind.

3. Stelleinheit nach Anspruch 1 oder 2, **dadurch gekennzeichnet, dass** die Aufnahmevorsprünge (15) zumindest teilweise gleichmäßig am Umfang des Gummilagers (10) verteilt angeordnet sind.

4. Stelleinheit nach einem der Ansprüche 1 bis 3, **dadurch gekennzeichnet, dass** die Aufnahmevorsprünge (15) derart am Gehäuse (8a, 8b) ausgebildet sind, dass keine Hinterschnitte am Gehäuse (8a, 8b) gebildet sind.

5. Stelleinheit nach einem der Ansprüche 1 bis 4, **dadurch gekennzeichnet, dass** die Aufnahmevorsprünge (15) zusammen mit dem Gehäuse (8a, 8b) spritzgeformt werden.

6. Stelleinheit nach einem der Ansprüche 1 bis 5, **dadurch gekennzeichnet, dass** zu den Aufnahmevorsprüngen (15) korrespondierende Aufnahmeeinformungen (11) und/oder Erhebungen (12) vorsprungseitig am Gummilager (10) zur zusammengesetzten Ausbildung einer Verdrehsicherung des Gummilagers (10) gegenüber dem Gehäuse (8a, 8b) realisiert sind.

7. Stelleinheit nach einem der Ansprüche 1 bis 6, **dadurch gekennzeichnet, dass** das Gummilager (10) antriebsseitig zumindest eine in eine Ausnehmung (18) des Antriebes (2) eingreifende Ausformung (17) zur verdrehsicheren Lagerung des Antriebes (2) im Gummilager (10) aufweist.

8. Stelleinheit nach einem der Ansprüche 1 bis 7, **dadurch gekennzeichnet, dass** das Gummilager (10) mit zumindest einem Axialfortsatz (13) ausgerüstet ist, welcher an einer Stützfläche (14) und/oder einer axialen Ausnehmung im Gehäuse (8a, 8b) zur axialen Lagesicherung des Gummilagers (10) anliegt.

9. Stelleinheit nach Anspruch 8, **dadurch gekennzeichnet, dass** der Axialfortsatz (13) in Verlängerung einer Abtriebswelle (5) des Antriebes (2) vorgesehen ist.

10. Stelleinheit nach einem der Ansprüche 1 bis 9, **dadurch gekennzeichnet, dass** das Gummilager (10) als topfförmiger Gummilagerring (10) ausgebildet ist.

11. Stelleinheit nach Anspruch 10, **dadurch gekennzeichnet, dass** der Antrieb (2) mit seinem Boden (2a) in den topfförmigen Gummilagerring (10) eingesetzt ist.

12. Stelleinheit nach Anspruch 10 oder 11, **dadurch gekennzeichnet, dass** der Gummilagerring (10) an seinem Umfang in Axialrichtung (A) im Querschnitt wellenförmig ausgebildet ist.

13. Stelleinheit nach Anspruch 12, **dadurch gekennzeichnet, dass** mehrere Rillen oder Nuten (11) in Axialrichtung (A) hintereinander angeordnet sind, welche als Aufnahmeeinformungen (11) mit den Aufnahmevorsprüngen (15) am Gehäuse (8a, 8b) wechselwirken.

14. Stelleinheit nach einem der Ansprüche 1 bis 13, **dadurch gekennzeichnet, dass** der Antrieb (2) und das Gummilager (10) rotationssymmetrisch im Vergleich zu einer gemeinsamen Rotationssymmetrieachse (A) ausgebildet sind.

## Claims

1. Actuator unit for automotive applications, in particular motor vehicle door latches (1), with a housing (8a, 8b), furthermore with a drive (2) arranged in the housing (8a, 8b), an actuator (3, 4) actable upon by the drive (2), and with at least one rubber bearing (10) for the drive (2), **characterized in that** the housing (8a, 8b) is equipped with mounting protrusions (15) distributed around the circumference of the rubber bearing (10) in the area of a rubber bearing mounting (16).

2. Actuator unit according to claim 1, **characterized in that** three or more mounting protrusions (15) are provided for in the rubber bearing mounting (16) in the housing (8a, 8b).

3. Actuator unit according to claim 1 or 2, **characterized in that** the mounting protrusions (15) are at least partly uniformly arranged around the circumference of the rubber bearing (10).

4. Actuator unit according to one of the claims 1 to 3, **characterized in that** the mounting protrusions (15) are formed on the housing (8a, 8b) in such a way that no indentations are formed on the housing (8a, 8b).

5. Actuator unit according to one of the claims 1 to 4, **characterized in that** the mounting protrusions (15) are injection-molded together with the housing (8a, 8b).

6. Actuator unit according to one of the claims 1 to 5, **characterized in that** mounting recesses (11) corresponding to the mounting protrusions (15) and/or elevations (12) are executed on the protrusion side on the rubber bearing (10), assembled forming an anti-twist protection of the rubber bearing (10) against the housing (8a, 8b).

7. Actuator unit according to one of the claims 1 to 6, **characterized in that** the rubber bearing (10) demonstrates at least one molding (17) engaging into a recess (18) of the drive (2) on the drive side for a mounting of the drive (2) in the rubber bearing (10) secured against rotation.

8. Actuator unit according to one of the claims 1 to 7, **characterized in that** the rubber bearing (10) is equipped with at least one axial extension (13) which fits against a supporting surface (14) and/or in an axial recess in the housing (8a, 8b) to the axial position securing of the rubber bearing (10).

9. Actuator unit according to claim 8, **characterized in that** the axial extension (13) is provided for to extend a pinion shaft (5) of the drive (2).

10. Actuator unit according to one of the claims 1 to 9, **characterized in that** the rubber bearing (10) is formed as a pot-shaped rubber bearing ring (10).

11. Actuator unit according to claim 10, **characterized in that** the drive (2) is inserted into the pot-shaped rubber bearing ring (10) with its base (2a).

12. Actuator unit according to claim 10 or 11, **characterized in that** the rubber bearing ring (10) has a waveform in the cross-section on its circumference in an axial direction (A).

13. Actuator unit according to claim 12, **characterized in that** several notches or grooves (11) are arranged behind one another in an axial direction (A) which interact as mounting recesses (11) with the mounting protrusions (15) on the housing (8a, 8b).

14. Actuator unit according to one of the claims 1 to 13, **characterized in that** the drive (2) and the rubber bearing (10) are rotationally symmetrical compared to a common rotational symmetrical axis (A).

## Revendications

1. Unité de réglage pour des applications en technique automobile, notamment pour des serrures (1) de portes de véhicules à moteur avec un boîtier (8a, 8b), de plus avec un mécanisme d'entraînement (2) disposé dans un boîtier (8a, 8b), un actionneur (3, 4) apte à être sollicité par le mécanisme d'entraînement ((2) et au moins un palier caoutchouc (10) destiné au mécanisme d'entraînement (2) **caractérisée en ce que** le boîtier (8a, 8b) est équipé de saillies de logement (15) réparties sur la circonférence du palier caoutchouc (10) et situés dans la zone d'un logement de palier caoutchouc (16).

2. Unité de réglage selon la revendication 1 **caractérisée en ce que** trois saillies de logement (15) ou plus sont prévues dans le logement de palier caoutchouc (16) dans le boîtier (8a, 8b).

3. Unité de réglage selon la revendication 1 ou 2 **caractérisée en ce que** les saillies de logement (15) sont réparties au moins partiellement de façon régulière sur la circonférence du palier caoutchouc (10).

4. Unité de réglage selon l'une des revendications 1 ou 3 **caractérisée en ce que** les saillies de logement (15) sont formées au boîtier (8a, 8b) de façon qu'aucune contre-dépouille ne soit formée au boîtier (8a, 8b).

5. Unité de réglage selon l'une des revendications 1 à 4 **caractérisée en ce que** les saillies de logement (15) sont formées par moulage par injection avec le boîtier (8a, 8b).

6. Unité de réglage selon l'une des revendications 1 à 5 **caractérisée en ce que** les cavités de logement (11) et/ou les éminences (12) correspondant aux saillies de logement (15) sont réalisés côté saillie au palier caoutchouc (10) en la formation composée d'un dispositif anti-rotation du palier caoutchouc (10) par rapport au boîtier (8a, 8b).

7. Unité de réglage selon l'une des revendications 1 à 6 **caractérisée en ce que** le palier caoutchouc (10) présente au moins un modelage (17) s'engrenant dans une cavité (18) du mécanisme d'entraînement (2) pour le logement assuré contre la torsion du mécanisme d'entraînement (2) dans le palier caoutchouc (10).

8. Unité de réglage selon l'une des revendications 1 à 7 **caractérisée en ce que** le palier caoutchouc (10) est équipé d'au moins un prolongement axial (13) qui pose sur une surface d'appui (14) et/ou une cavité axiale dans le boîtier (8a, 8b) pour assurer la position axiale du palier caoutchouc (10).

9. Unité de réglage selon la revendication 8 **caractérisée en ce que** le prolongement axial (13) est prévu dans le prolongement de l'arbre d'entraînement (5) du mécanisme d'entraînement (2).

10. Unité de réglage selon l'une des revendications 1 à 9 **caractérisée en ce que** le palier caoutchouc (10) est formé comme bague de palier caoutchouc (10) en forme de pot.

11. Unité de réglage selon la revendication 10 **caractérisée en ce que** le mécanisme d'entraînement (2) est installé avec son fond (2a) dans la bague de palier caoutchouc (10) en forme de pot.

12. Unité de réglage selon l'une des revendications 10 ou 11 **caractérisée en ce que** la bague de palier caoutchouc (10) est formée de façon ondulée à sa circonférence dans le sens axial (A) dans la section.

13. Unité de réglage selon la revendication 12 **caractérisée en ce que** sont placées l'une après l'autre dans le sens axial (A) plusieurs rainures ou encoches (11) qui interagissent comme cavités de logement (11) avec les saillies de logement (15) au boîtier (8a, 8b).

14. Unité de réglage selon l'une des revendications 1 à 13 **caractérisée en ce que** le mécanisme d'entraînement (2) et le palier caoutchouc (10) sont formés de façon symétrique en comparaison à un axe de symétrie de rotation (A) commun.
